# EUROPÄISCHE PATENTSCHRIFT

(11) **EP 4 326 992 B1**
(45) Veröffentlichungstag und Bekanntmachung des Hinweises auf die Patenterteilung: **01.07.2026**
(21) Anmeldenummer: 22728521.0
(22) Anmeldetag: 10.05.2022
(51) Int. Cl.: F16C 17/06, F16C 17/03

(54) **GLEITLAGERSEGMENT FÜR EIN GLEITLAGER UND GLEITLAGER**
SLIDING-BEARING SEGMENT FOR A SLIDING BEARING, AND SLIDING BEARING
SEGMENT DE PALIER LISSE POUR PALIER LISSE ET PALIER LISSE

(30) Priorität: 08.06.2021 DE 102021205737
(43) Veröffentlichungstag der Anmeldung: 28.02.2024
(60) Teilanmeldung: 26168567.1
(73) Patentinhaber: Siemens Energy Global GmbH & Co. KG, 81739 München (DE)
(72) Erfinder: HOFMANN, Andreas, 79793 Horheim (DE); WILM, Dennis, 45131 Essen (DE); YADAV, Anuj Kumar, New Delhi 110052 (IN)
(86) Internationale Anmeldenummer: PCT/EP2022/062614
(87) Internationale Veröffentlichungsnummer: WO 2022/258282

(56) Entgegenhaltungen:
- EP-A1- 2 653 736
- JP-A- 2009 257 590
- JP-A- 2014 173 718
- JP-A- H11 351 243
- US-B1- 10 107 079

## Beschreibung

Die Erfindung betrifft ein Gleitlagersegment aus oder mit Kunststoff für ein Gleitlager, bei dem insbesondere PEEK verwendet wird, welches noch verstärkt und/oder arretiert werden muss, um höheren mechanischen Belastungen gerecht zu werden. Ein solches Axiallager ist z.B. in US 10,107,079 beschrieben. Polyether-Ether-Ketone (PEEK) sind thermoplastische Polymere, welche gegenüber einer Babbitt/Weißmetall-Beschichtung höhere Belastungen erlauben.

Jedoch weist Kunststoff oder PEEK für schwerere Rotoren oder bei höheren mechanischen Belastungen ein zu geringes elastisches Modul auf, sodass es zu größeren Verformungen kommen kann und Kunststoff nicht eingesetzt werden kann.

Aus der EP 2 653 736 A ist ein weiteres Gleitlagersegment bekannt.

Es ist daher Aufgabe der Erfindung oben genanntes Problem zu lösen.

Die Aufgabe wird gelöst durch ein Gleitlagersegment gemäß Anspruch 1 und einem Gleitlager gemäß Anspruch 12.

In den Unteransprüchen sind weitere vorteilhafte Maßnahmen aufgelistet, die beliebig miteinander kombiniert werden können, um weiter Vorteile zu erzielen.

Es zeigen die
- Figuren 1, 2: ein Gleitlagersegment für ein Gleitlager,
- Figuren 3 - 5: einen modularen Aufbau einer Platte für Gleitlager sowie
- Figuren 6 - 8: weitere Befestigungen oder Verstärkungsmechanismen für ein Gleitlagersegment.

Die Beschreibung und die Figuren stellen nur Ausführungsbeispiele der Erfindung dar.

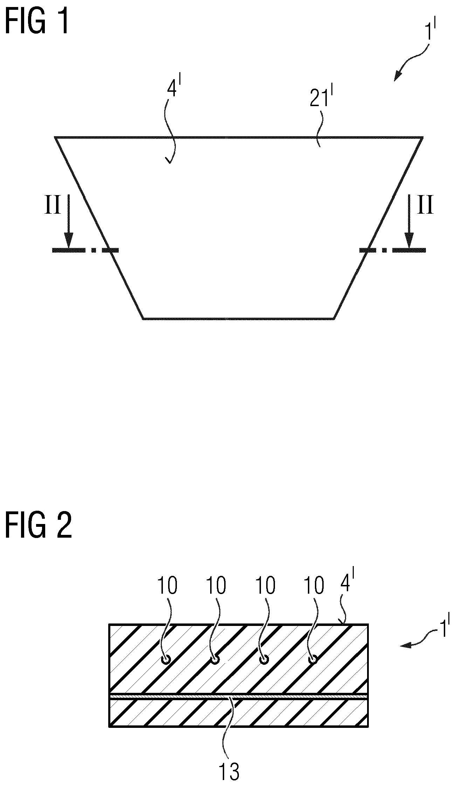

Figur 1 zeigt eine Aufsicht auf ein massives Gleitlagersegment 1^{I} aus einem Kunststoff, das für ein Gleitlager verwendet wird.

Insbesondere wird für den Kunststoff PEEK verwendet.

Die Oberfläche 4' stellt die äußere Kontaktfläche für das Gleitlager dar.

Das Gleitlagersegment 1^{I} stellt gemäß Aufsicht oder im Querschnitt vorzugsweise ein Trapez dar oder ist trapezförmig ausgebildet.

Andere typische Geometrien und Formen von Gleitlagersegmenten sind ebenso möglich.

Figur 2 zeigt einen Querschnitt entlang der Linie II der Figur 1.

Zu erkennen ist, dass in der einen Richtung (senkrecht zur Zeichnungsebene) mehrere Längs-Verstärkungsstäbe 10 als Verstärkungselemente in einer Ebene (aber auch in mehreren Ebenen möglich) vorhanden sind.

Quer dazu (in der Zeichnungsebene), insbesondere rechtwinklig dazu, sind weitere Quer-Verstärkungsstäbe 13 als Verstärkungselemente vorhanden, die zusammen mit den Längs-Verstärkungsstäben 10 das elastische Modul des Gleitlagersegment 1^{I} im Kunststoff erhöhen.

Ebenso vorzugsweise sind hier mehrere Quer-Verstärkungsstäbe 13 in einer Ebene angeordnet (in dieser Schnittdarstellung nicht sichtbar).

Ebenso können mehrere Ebenen von Quer- und Längs-Verstärkungselemente im Gleitlagersegment 1^{I} vorhanden sein.

Weitere Anordnungen von Quer und/oder Längs-Verstärkungsstäben 10, 13 sind denkbar.

Die Verstärkungsstäbe 10, 13 erstrecken sich vorzugsweise über die gesamte Breite, Länge oder Höhe des Gleitlagersegments 1^{I}, wie hier für das Quer-Verstärkungselement 13 gezeigt.

Die Verstärkungsstäbe 10, 13 können nachträglich in den Kunststoff oder in eine massive Kunststoffplatte eingebracht werden oder werden direkt bei der Herstellung integriert, insbesondere mit eingegossen, umspritzt, ... und bilden so das Gleitlagersegment 1^{I}.

Die Verstärkungsstäbe 10, 13 als Verstärkungselemente sind nicht miteinander verwoben.

Die Verstärkungsstäbe 10, 13 als Verstärkungselemente sind vorzugweise aus Stahl.

Die Verstärkungsstäbe 10, 13 weisen vorzugsweise einen Durchmesser von 1mm bis 2mm auf.

Die Kunststoffplatte 21^{I} ist vorzugsweise aus PEEK.

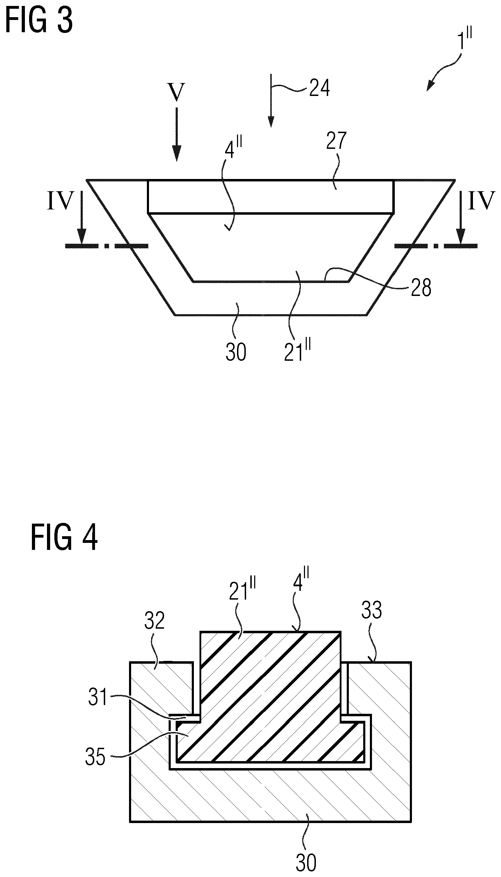

Figur 3 zeigt eine weitere Aufsicht auf ein Gleitlagersegment 1^{II}, das modular aufgebaut ist.

In einem vorzugsweise plattenförmigen Stützkörper 30 ist eine Kunststoffplatte 21^{II} gehalten.

Die Kunststoffplatte 21^{II} wird entlang einer Einschubrichtung 24 über einen abgesenkten Bereich 27, einer Einführungsöffnung, in den Stützkörper 30 eingeführt.

Der Stützkörper 30 weist auf einer Seite in seiner Mitte eine Vertiefung auf, in der die Kunststoffplatte 21^{III} angeordnet ist.

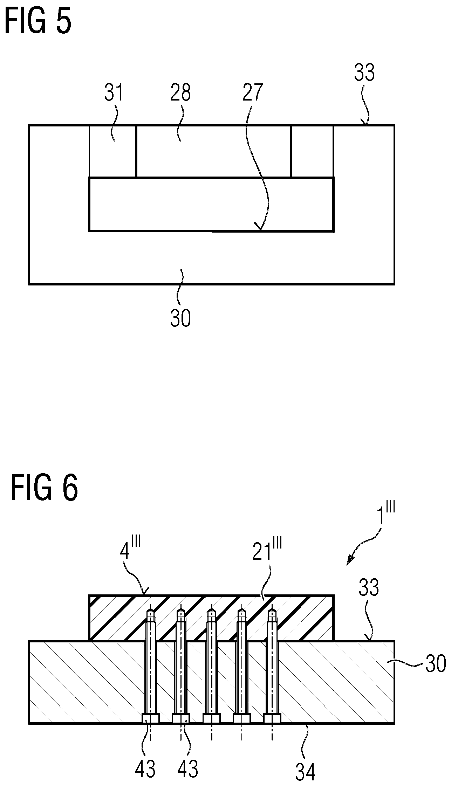

Die Kunststoffplatte 21^{II} liegt dann in der Vertiefung an einer Hinterseite 28 an (Fig. 4, 5).

Die Kunststoffplatte 21^{II} wird in geeigneter Weise formschlüssig an hier vorzugsweise drei Seiten gehalten (Fig. 3, 7, 8).

Der Stützkörper 30 ist vorzugsweise aus Stahl.

Der Stützkörper 30 ist ebenfalls vorzugsweise wie die Kunststoffplatte 21^{II} trapezförmig ausgebildet.

Andere typische Geometrien und Formen von Gleitlagersegmenten sind ebenso möglich.

Die Kunststoffplatte 21^{II} ist vorzugsweise aus PEEK.

Die Befestigung der Kunststoffplatte 21^{II} kann durch eine Hinterschneidung 31 in dem Stützkörper 30 gemäß Figur 4 ausgebildet sein, wobei die Hinterschneidung 31 einen entsprechenden Vorsprung 32 als Teil des Stützkörpers 30 bedingt und aufweist.

Komplementär dazu weist die Kunststoffplatte 21^{II} an ihrem Boden gegenüber der Oberfläche 4'' einen Vorsprung 35 auf, der in die Hinterschneidung 31 eingreift.

Auch so wird durch die Stützung eine Verstärkung ausgebildet. Weitere Mechanismen zum Formschluss sind möglich.

Die Kunststoffplatte 21^{II} ragt über die äußere Oberfläche 33 des Stützkörpers 30 hinaus, so dass seine Oberfläche 4'' eine Kontaktfläche darstellen kann.

In Figur 6, vorzugsweise ausgehend von Figur 3 oder von Figur 4 ist dargestellt, wie eine Kunststoffplatte mit dem Stützkörper 30 befestigt werden kann und auch so das elastische Modul der Gleitlagersegmente 1^{I}, 1^{II} bzw. der Kunststoffplatten 21^{II} verstärkt werden kann.

Dies erfolgt durch Bolzen, also bspw. einfache Stifte ohne Gewinde oder Schrauben 43, als Verstärkungselemente, die fest im Stützkörper 30 verankert sind oder werden und in das Volumen der Kunststoffplatte 21^{I}, 21^{III}, 21^{IV}, 21^{V} hineingreifen. Dies kann hier vorzugsweise von der Rückseite 34 des Stützkörpers 30 her erfolgen.

Die Eindringtiefe der Bolzen oder Schrauben 43 in die Kunststoffplatte 21^{III} sowie Anordnung und Anzahl der Bolzen oder Schrauben 43 kann variieren.

Dies stellt eine Arretierungsfunktion der Stifte/Bolzen dar sowie auch ein Verstärkungseffekt.

Dabei kann die Kunststoffplatte 21^{III} auch zusätzlich mit der Hinterschneidung 31 (Fig. 4, 5) am Stützkörper 30 gestützt sein.

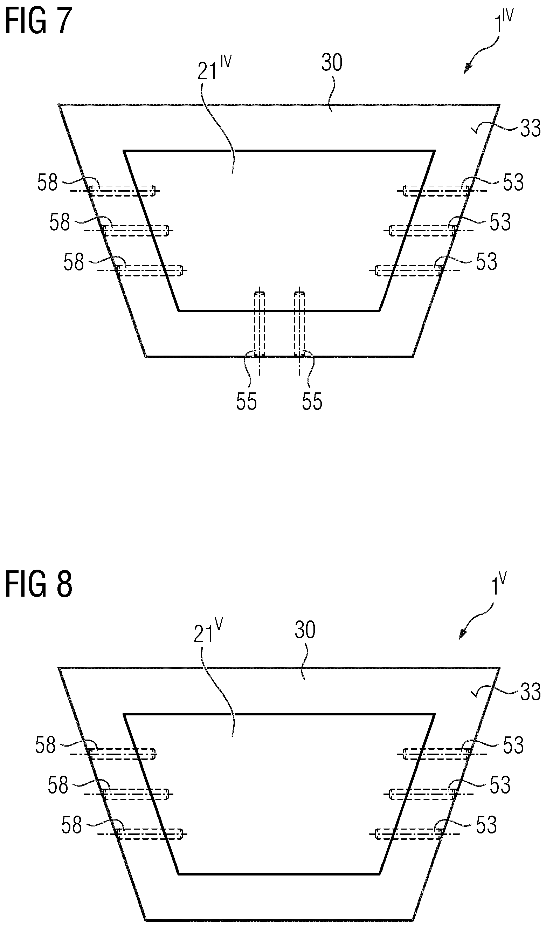

In Figur 7 ist ausgehend von Figur 3 oder Figur 4, aber auch ausgehend von Figur 2 dargestellt, wie durch Bolzen oder Schrauben 53, 55 oder 58 eine Kunststoffplatte 21^{IV} in dem Stützkörper 30 in Position zu halten und auch zu befestigen und in ihrem Elastizitätsmodul zu verstärken ist.

Dies erfolgt hier vorzugsweise von drei Seiten der Kunststoffplatte 21^{IV}, kann aber auch selektiv nur von einer oder zwei2 Seiten erfolgen. So sind beispielsweise in einem Ausführungsbeispiel Stifte 53, 55, 58 von drei Seiten vorhanden und in einem weiterem Ausführungsbeispiel sind nur die Stifte 53, 58 von zwei Seiten vorhanden (Fig 8).

Dies stellt eine Arretierungsfunktion der Stifte/Bolzen dar sowie auch ein Verstärkungseffekt.

Ebenso kann mittels des Bolzens 43 (Fig. 6), 53, 55, 58 (Fig. 7, 8) eine Temperaturmessung erfolgen.

Die Kunststoffplatte 21^{IV}, 21^{V} oder der Stützkörper 30 kann auch eine Vertiefung aufweisen, über die Öl zugeführt wird (LEG Design).

Ebenso ist die Art der Verstärkung oder Stützung gemäß Figuren 2 bis 8 nicht nur bei Radiallagern oder Axiallagern anwendbar, sondern auch für feste Segmentlager möglich.

In den Beispielen gemäß Figur 3, 4, 6, 7 und 8 kann auch eine Kunststoffplatte 21^{I} gemäß Figur 2 verwendet werden.

## Patentansprüche

1. Gleitlagersegment (1^{I}, 1^{I} , 1^{III}, 1^{IV}, 1^{V} )
für ein Gleitlager,
das eine Kunststoffplatte (21^{I}, 21^{II}, 21^{III}, 21^{IV}, 21^{V}) aufweist,
das zumindest ein Verstärkungselement (10, 13; 31, 35; 43, 53, 55, 58) aufweist
zur Verstärkung oder zu Arretierung,
und
bei dem Längs-Verstärkungsstäbe (10) und/oder quer dazu, insbesondere 90° dazu,
Quer-Verstärkungsstäbe (13) in der Kunststoffplatte (21^{I}, 21^{II}, 21^{III}, 21^{IV}, 21^{V}) vorhanden sind,
und sich dort über die jeweilige Breite oder Länge insbesondere vollständig erstrecken.

2. Gleitlagersegment nach Anspruch 1,
bei dem die Verstärkungselemente (10, 13; 31, 35; 43, 53, 55, 58) aus Stahl sind.

3. Gleitlagersegment nach einem oder beiden der Ansprüche 1 oder 2,
bei dem die Kunststoffplatte (21^{II}, 21^{III}, 21^{IV}, 21^{V}) in einem Stützkörper (30) gestützt und/oder befestigt ist.

4. Gleitlagersegment nach Anspruch 3,
bei dem der Stützkörper (30) Stahl aufweist, insbesondere aus Stahl besteht.

5. Gleitlagersegment nach einem oder beiden der Ansprüche 3 oder 4,
bei dem der Stützkörper (30) eine Vertiefung und eine Hinterschneidung (31) aufweist,
in die ein Vorsprung (35) einer Kunststoffplatte (21^{II}, 21^{III}, 21^{IV}, 21^{V}) eingreifen kann.

6. Gleitlagersegment nach einem oder mehreren der vorherigen Ansprüche,
bei dem das Gleitlagersegment (1^{I}, 1^{II}, 1^{III}, 1^{IV}, 1^{V}) und/oder die Kunststoffplatte (21^{II}, 21^{III}, 21^{IV}, 21^{V}) trapezförmig ausgebildet ist.

7. Gleitlagersegment nach einem oder mehreren der Ansprüche 3, 4 oder 5,
bei dem die Kunststoffplatte (21^{I}, 21^{II}, 21^{III}, 21^{IV}, 21^{V}) durch Bolzen oder Schrauben (43) als Verstärkungselemente, die durch den Stützkörper (30) hindurchgreifen,
am Stützkörper (30) befestigt und verstärkt ist.

8. Gleitlagersegment nach Anspruch 7,
bei dem die Bolzen und Schrauben (43) von der Rückseite (32) des Stützkörpers (30) in die Kunststoffplatte (21^{II}, 21^{III}, 21^{IV}, 21^{V}) hineingreifen.

9. Gleitlagersegment nach einem oder beiden der Ansprüche 7 oder 8,
bei dem die Bolzen und Schrauben (53, 55, 58) von zumindest einer Seitenfläche des Stützkörpers (30) in die Kunststoffplatte (21^{II}, 21^{III}, 21^{IV}, 21^{V}) hineingreifen.

10. Gleitlagersegment nach einem oder mehreren der Ansprüche 1, 2, 3, 4, 5, 6, 7, 8 oder 9,
bei dem ein Kunststoff aus PEEK verwendet wird.

11. Gleitlagersegment nach einem oder mehreren der Ansprüche 1, 2, 3, 4, 5, 6, 7, 8 oder 10,
bei dem die Verstärkungselement (10, 13; 31, 35; 43, 53, 55, 58) einen Durchmesser von 1mm bis 2mm aufweisen.

12. Gleitlager,
insbesondere ein Axiallager,
das ein Gleitlagersegment gemäß einem oder mehreren der Ansprüche 1 bis 11 aufweist.

13. Gleitlager nach Anspruch 12,
bei dem die Kunststoffplatte (21^{I}, 21^{II}, 21^{III}, 21^{IV}, 21^{V}) oder
der Stützkörper (30)
eine Vertiefung aufweisen, über die Öl zugeführt wird.

## Claims

1. A sliding bearing segment (1^{I}, 1^{II}, 1^{III}, 1^{IV}, 1^{V})
for a sliding bearing,
having a plastic plate (21^{I}, 21^{II}, 21^{III}, 21^{IV}, 21^{V}),
having at least one reinforcing element (10, 13; 31, 35; 43, 53, 55, 58)
for reinforcing or locking,
and
in which longitudinal reinforcing rods (10) and/or transverse thereto, especially at 90° thereto, transverse reinforcing rods (13) are present in the plastic plate (21^{I}, 21^{II}, 21^{III}, 21^{IV}, 21^{V}) and there extend especially completely across the respective width or length.

2. The sliding bearing segment according to claim 1,
in which the reinforcing elements (10, 13; 31, 35; 43, 53, 55, 58) are made from steel.

3. The sliding bearing segment according to any one or both of claims 1 or 2,
in which the plastic plate (21^{II}, 21^{III}, 21^{IV}, 21^{V}) is supported and/or attached in a support body (30).

4. The sliding bearing segment according to claim 3,
in which the support body (30) has steel, especially consists of steel.

5. The sliding bearing segment according to any one or both of claims 3 or 4,
in which the support body (30) has a recess and an undercut (31)
which a protrusion (35) of a plastic plate (21^{II}, 21^{III}, 21^{IV}, 21^{V}) can engage.

6. The sliding bearing segment according to any one or more of the preceding claims,
in which the sliding bearing segment (1^{I}, 1^{II}, 1^{III}, 1^{IV}, 1^{V}) and/or the plastic plate (21^{II}, 21^{III}, 21^{IV}, 21^{V}) is formed to be trapezoid.

7. The sliding bearing segment according to any one or more of claims 3, 4 or 5,
in which the plastic plate (21^{I}, 21^{II}, 21^{III}, 21^{IV}, 21^{V}) is attached to the support body (30) and reinforced by bolts or screws (43) as reinforcing elements that pass through the support body (30).

8. The sliding bearing segment according to claim 7,
in which the bolts and screws (43) reach into the plastic plate (21^{II}, 21^{III}, 21^{IV}, 21^{V}) from the back side (32) of the support body (30).

9. The sliding bearing segment according to any one or both of claims 7 or 8,
in which the bolts and screws (53, 55, 58) reach into the plastic plate (21^{II}, 21^{III}, 21^{IV}, 21^{V}) from at least one side surface of the support body (30).

10. The sliding bearing segment according to any one or more of claims 1, 2, 3, 4, 5, 6, 7, 8 or 9,
in which a plastic made of PEEK is used.

11. The sliding bearing segment according to any one or more of claims 1, 2, 3, 4, 5, 6, 7, 8 or 10,
in which the reinforcing elements (10, 13; 31, 35; 43, 53, 55, 58) have a diameter of 1 mm to 2 mm.

12. A sliding bearing,
in particular an axial bearing,
having a sliding bearing segment according to any one or more of claims 1 to 11.

13. The sliding bearing according to claim 12,
in which the plastic plate (21^{I}, 21^{II}, 21^{III}, 21^{IV}, 21^{V}) or the support body (30) have a recess via which oil is supplied.

## Revendications

1. Segment de palier lisse (1^{I}, 1^{II}, 1^{III}, 1^{IV}, 1^{V}) pour un palier lisse,
présentant une plaque en matière plastique (21^{I}, 21^{II}, 21^{III}, 21^{IV}, 21^{V}),
lequel présente au moins un élément de renforcement (10, 13 ; 31, 35 ; 43, 53, 55, 58)
pour le renforcement ou pour le blocage,
et
dans lequel des barres de renforcement longitudinales (10) et/ou, transversalement par rapport à celles-ci, en particulier à 90° par rapport à celles-ci, des barres de renforcement transversales (13) sont présentes dans la plaque en matière plastique (21^{I}, 21^{II}, 21^{III}, 21^{IV}, 21^{V}), et s'y étendent, en particulier complètement, sur la largeur ou la longueur respective.

2. Segment de palier lisse selon la revendication 1,
dans lequel les éléments de renforcement (10, 13 ; 31, 35 ; 43, 53, 55, 58) sont en acier.

3. Segment de palier lisse selon l'une ou les deux des revendications 1 ou 2,
dans lequel la plaque en matière plastique (21 II, 21^{III}, 21^{IV}, 21^{V}) est soutenue et/ou fixée dans un corps de support (30).

4. Segment de palier lisse selon la revendication 3,
dans lequel le corps de support (30) présente de l'acier, en particulier est constitué d'acier.

5. Segment de palier lisse selon l'une ou les deux des revendications 3 ou 4,
dans lequel le corps de support (30) présente un évidement et une contre-dépouille (31) dans lesquels
peut s'engager une saillie (35) d'une plaque en matière plastique (21^{II}, 21^{III}, 21^{IV}, 21^{V}).

6. Segment de palier lisse selon une ou plusieurs des revendications précédentes,
dans lequel le segment de palier lisse (1^{I}, 1^{II}, 1^{III}, 1^{IV}, 1^{V}) et/ou la plaque en matière plastique (21^{II}, 21^{III}, 21^{IV}, 21^{V}) est réalisé(e) sous forme trapézoïdale.

7. Segment de palier lisse selon une ou plusieurs des revendications 3, 4 ou 5,
dans lequel la plaque en matière plastique (21^{I}, 21^{II}, 21^{III}, 21^{IV}, 21^{V}) est fixée au corps de support (30) et renforcée par des boulons ou des vis (43) en tant qu'éléments de renforcement qui traversent le corps de support (30).

8. Segment de palier lisse selon la revendication 7,
dans lequel les boulons et les vis (43) s'engagent dans la plaque en matière plastique (21^{II}, 21^{III}, 21^{IV}, 21^{V}) depuis la face arrière (32) du corps de support (30).

9. Segment de palier lisse selon l'une ou les deux des revendications 7 ou 8,
dans lequel les boulons et les vis (53, 55, 58) s'engagent dans la plaque en matière plastique (21^{II}, 21^{III}, 21^{IV}, 21^{V}) depuis au moins une surface latérale du corps de support (30).

10. Segment de palier lisse selon une ou plusieurs des revendications 1, 2, 3, 4, 5, 6, 7, 8 ou 9,
dans lequel une matière plastique en PEEK est utilisée.

11. Segment de palier lisse selon une ou plusieurs des revendications 1, 2, 3, 4, 5, 6, 7, 8 ou 10,
dans lequel les éléments de renforcement (10, 13 ; 31, 35 ; 43, 53, 55, 58) présentent un diamètre de 1 mm à 2 mm.

12. Palier lisse,
en particulier palier de butée,
présentant un segment de palier lisse selon une ou plusieurs des revendications 1 à 11.

13. Palier lisse selon la revendication 12,
dans lequel la plaque en matière plastique (21^{I}, 21^{II}, 21^{III}, 21^{IV}, 21^{V}) ou le corps de support (30) présente un évidement par lequel de l'huile est amenée.
